# EUROPEAN PATENT SPECIFICATION

(11) **EP 2 860 391 B1**
(45) Date of publication and mention of the grant of the patent: **16.11.2016**
(21) Application number: 13758343.1
(22) Date of filing: 03.04.2013
(51) Int. Cl.: F03D 3/00, F03D 3/06, F03D 5/06

(54) **GENERATOR WITH VERTICAL PISTON AND RECIPROCAL MOVEMENT, WITH ORIENTABLE BLADES AND CONVERSION OF MECHANICAL ENERGY TO ELECTRICAL ENERGY BY MEANS OF A VERTICAL SOLENOID DEVICE**
GENERATOR MIT VERTIKALEM KOLBEN UND HIN- UND HERBEWEGUNG, MIT VERSTELLBAREN SCHAUFELN UND UMWANDLUNG VON MECHANISCHER ENERGIE IN ELEKTRISCHE ENERGIE DURCH EINE VERTIKALE SOLENOIDVORRICHTUNG
GÉNÉRATEUR À PISTON VERTICAL ET DÉPLACEMENT ALTERNATIF, À PALES ORIENTABLES ET CONVERSION DE L'ÉNERGIE MÉCANIQUE EN ÉNERGIE ÉLECTRIQUE AU MOYEN D'UN DISPOSITIF VERTICAL SOLÉNOÏDE

(43) Date of publication of application: 15.04.2015
(73) Proprietor: Carretero Bueno, Rosario, 28009 Madrid (ES)
(72) Inventor: Carretero Bueno, Rosario, 28009 Madrid (ES)
(74) Representative: Jeannet, Olivier
(86) International application number: PCT/IB2013/000592
(87) International publication number: WO 2013/132333

(56) References cited:
- WO-A2-2009/115253
- WO-A2-2009/115253
- DE-A1- 19 937 965
- ES-U- 1 063 482
- FR-A1- 2 919 686
- GB-A- 2 480 848
- JP-A- 2009 203 893
- US-A- 3 995 972
- US-A1- 2009 224 553
- US-A1- 2011 064 576

## Description

### OBJECT OF THE INVENTION

The present invention relates to a new type of generator which takes advantage of the movement of a fluid (air or water), for obtaining electrical energy. The incident flow of fluid (air or water), affects multiple blades with a special profile and variable inclination, producing a force whose direction is vertically upward and downward alternately. This alternative direction force causes the movement of a piston, concentric to the main shaft of the generator.

The piston has a series of magnets inside, that travel longitudinally relative to the shaft, the latter incorporating a solenoid in the internal part of its structure.

The relative motion of the magnets and the solenoid produces an electromotive force and generates an electrical potential that is collected at the terminals of the solenoid for later use.

### FIELD OF THE INVENTION

The invention presented affects Mechanics Section of the International Patent Classification, chapter of Motors and Pumps with regard to Wind or Hydraulic Motors manufacture, from the industrial point of view, in the manufacture of special generators and related accessories.

### BACKGROUND OF THE INVENTION

Wind generators with horizontal and vertical axes and with different engine technologies and different types of rotor and blades exist, see e.g. WO2009/115 253.

Concerning the generators with vertical axis, several are provided with one or more rotors, blade rotors movable in height, blades with optimized orientation, blades with variable structure, multiplier devices, permanent magnets, motor starters in the case of slow velocity wind, and many others.

The same is true for the horizontal axis generators that are today the most used in wind power generation plants with highly developed technology.

However, there are no relevant developments based on the principle proposed by the inventor, being new in this field with the corresponding advantages over existing wind-generators.

### SUMMARY OF THE PRESENT INVENTION

The present invention relates to a new type of generator which takes advantage of the movement of a fluid (air or water) for obtaining electrical energy.

Basically, it consists of a column or main shaft that constitutes the bearing structure of the generator device. This structure with its corresponding base can be braced by a series of tie-rods for stability.

Located in the upper portion is a head rotatable on a vertical shaft bearing that allows the automatic orientation of the generator in the optimum direction for the best generation of the wind or water power.

This rotating head in turn comprises a cylindrical body that is movable in vertical direction as a piston so that the movement thereof is alternately upwards and downwards. The force that drives the piston is generated by the incidence of air or water over a group of aerofoil blades rotatable about a horizontal axis. When the blades are oriented such that the fluid impinges on the bottom surface thereof, the resultant force is upward. Conversely, when the upper surface of the blades is exposed to the air or water stream, the movement is downward.

The resulting driving force, up or down, depends on the angle of incidence, being understood that the gravity intensifies the downward forces and vice versa.

The change in the orientation of the blades is achieved through a tooth wheel and rack mechanism with a crank-type transmission, whose operation is easily understandable from the figures incorporated herein as an integral part of the description.

The power generation is achieved by relative reciprocation of a series of neodymium magnets, or any other kind, located on the moving cylinder, with respect to a solenoid type coil installed in the head.

The present invention allows achieving significant cost savings relative to existing rotary devices currently on the market, with horizontal or vertical axis as well. The proposed device is lighter than the traditional one and the distribution of mechanical forces in the elements is more homogeneous, which reduce costs, of the active part of the device (with lower weight particularly with regard to the rotating devices), and the shaft and foundations as well, which are sized for a lighter mobile structure than the usual rotating devices of horizontal or vertical axis and also allowing the use of an easy usable cable-stayed shaft, which use is more restricted in traditional generators because of the interference thereof with the rotating rotor tie-rods. The lower mechanical requirements make the device capable of being installed without civil works, using prefabricated slabs and foundations.

The figures included below facilitate understanding of the invention, showing the most significant details thereof.

### BRIEF DESCRIPTION OF THE DRAWINGS

Four Figs. are included herein, by way of example only, wherein:
FIGURE 1: is a plan view of the generator, which is shown in an assembly view where the main parts can be distinguished. The following elements can be identified:
   1. Generator
   2. Shaft
   3. Tie-rod
   4. Head
   5. Piston
   6. Blades
   7. Crankshaft
   8. Connecting rod
   9. Upper crankshaft
FIGURE 2: is a plan view where the generator is represented in two different positions: the left one shows the bottom position and the right one the top end position. In addition to the elements of the previous Figure, the following are listed:
   10. Bearing
   11.1 Tooth ascent wheel
   11.2 Tooth descent wheel
   12. Bar
   13. Magnet
   14. Solenoid
FIGURE 3
   This figure depicts the generator with its piston in the most downward position and a side view showing the details of the mechanism which allow to modify the position of the blades when the downward stroke is completed. The upward tooth wheel and the racks are shown on the left of the view. On the right is shown the downward tooth wheel, which in this case is inactive, being and "idle wheel".
   The following elements are shown:
   12.1 Bottom rack
   12.2 Upper rack
   F1 Wind force
   F2 Ascendant force
FIGURE 4
   This figure depicts the generator with its piston in the most upper position and a side view showing the details of the mechanism which allow to modify the position of the blades when the upward stroke is completed. The downward tooth wheel and the racks are shown on the right of the view. On the left of the side of the view is shown the upward tooth wheel, which in this case is inactive, being an "idle wheel".
   The following element is shown:
   F3 downward force

### DETAILED DESCRIPTION OF THE PREFERRED EMBODIMENT

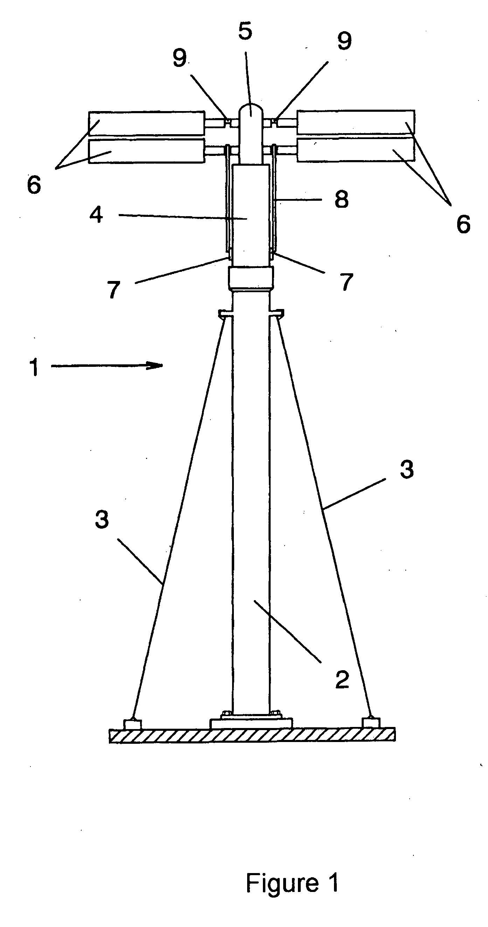

The generator with vertical and reciprocating piston, with orientatable blades and converting mechanical energy into electrical energy through a vertical solenoid device (1) (Figs 1, 2, 3 and 4), is a machine that uses the kinetic energy of a fluid (air or water) for transforming into electrical energy.

According to the inventor's preferred embodiment, the device comprises a shaft (2) which constitutes the supporting structure of the generator (1) which is supported and bolted onto a concrete base and secured by tie-rods (3) which provide stability. At the top of the shaft (2), is a head (4) supported by a bearing (10), allowing the free rotation of the head (4) about a vertical axis, which enables the automatic orientation of the generator in the optimum direction for the best generation of the energy transmitted by wind or water, by a natural movement.

Said rotating head (4) includes a cylindrical body movable vertically that works as a piston (5) for upward and downward reciprocating movement. The driving force of the piston (5) is generated by air or water impact on a set of blades (6) or aerofoil fins rotatable about horizontal axis. If the blades (6) are oriented such that the fluid impinges on the bottom surface thereof, the resultant force is upward. In the opposite situation, in which the upper part of the blades (6) is impinged by the air or water stream, the resulting force is vertical and downward, causing a downward movement.

The resulting driving force, upwards or downwards, is more or less depending on the angle of incidence, it being obvious that the force of gravity is favourable to downward forces and counteract the upward forces.

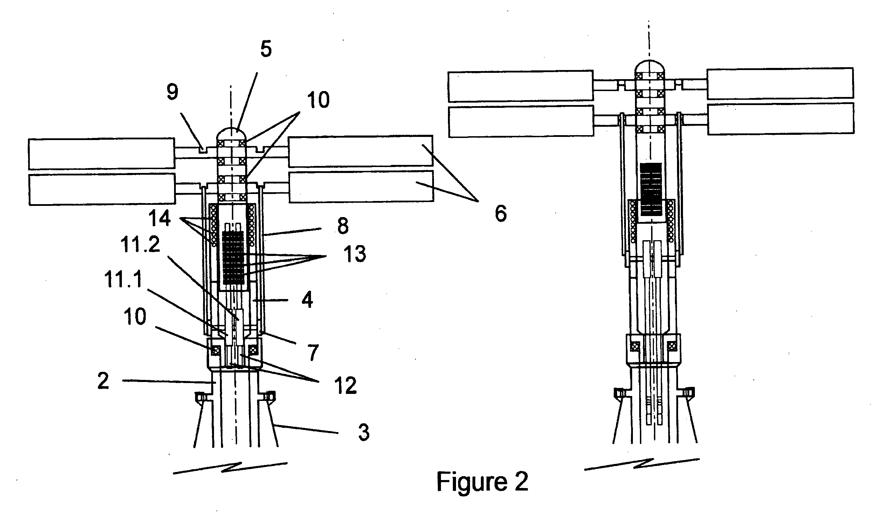

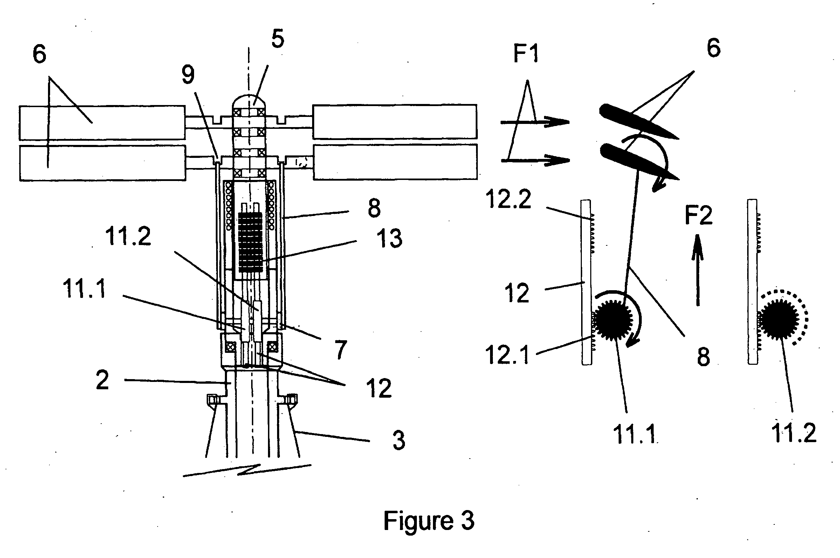

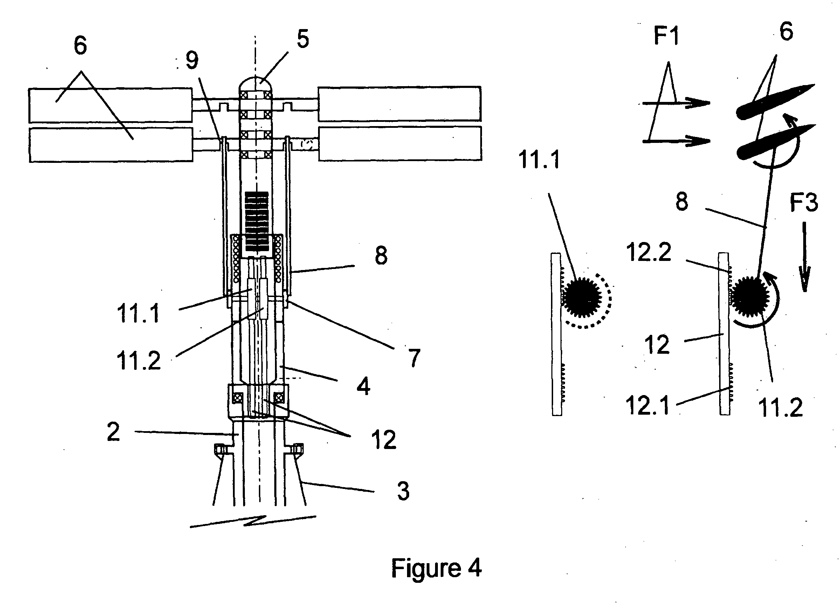

As part of the rotating head (4), and being made integral with it, two vertical bars (12) (Fig. 2) are provided, whose ends are equipped with the lower rack (12.1) and the upper rack (12.2) (Figs. 3 and 4) and there is a tooth-free section. These two bars (12), parallel and oriented similarly, could be replaced by a single one, of greater width, with identical rack sections.

As a part of the piston (5) and moving integrally therewith, there is a group of elements formed by a tooth ascent wheel (11.1), a tooth descent wheel (11.2), a common axis for the two wheels with eccentric cams (7) at its ends, two connecting rods (8), a series of blades (6) or fins, of horizontal axis, fitted with crankshafts (9) and bearings (10).

It is important to underline that the tooth ascent wheel (11.1) is free to rotate on its axis in one direction of rotation and is blocked on the same axis if rotated in the opposed direction. The tooth descent wheel (11.2) has the same features but with the particularity of being in opposition to the other wheel, i.e., when the tooth ascent wheel (11.1) is blocked, the tooth descent wheel (11.2) freely rotates and, conversely, when the tooth ascent wheel (11.1) freely rotates, the tooth descent wheel (11.2) is blocked on the common axis.

Finally, the power generation device is basically formed by a series of neodymium magnets (13) mounted to the piston (5) and a solenoid (14) mounted to the head (4).

Referring to Figs. 3 and 4 allows understanding the operation of the generator. If we start from the lower position of the piston (5), shown in (Fig 3), we see that the blades (6) are oriented so that the wind force (F1) impinges on the lower part thereof, causing a downward pushing force represented by the lifting force (F2). Shortly before the piston (5) reaches the top position, as shown in (Fig. 4), the tooth descent wheel (11.2), blocked about its axis, engages the upper rack region (12.2), thus rotating the eccentric (7) counter clockwise, pushing the rod (8) upward, which causes the blades (6) to rotate also counter clockwise, to push the corresponding crankshaft (9).

For the reason described above, the tooth ascent wheel (11.1) freely rotates and does not exert any action. The blades (6) have been oriented so as to offer their upper part to wind force (F1), which causes the piston (5) to begin its descent with the downward force (F3).

Likewise, shortly before the piston (5) reaches the lowest position shown in (Fig. 3), tooth ascent wheel (11.1), blocked on its axis, meshes with the bottom rack section (12.1), thus causing the eccentric (7) to rotate clockwise, pulling the rod (8) downward, which causes the blades (6) to also rotate clockwise, driven by the corresponding crankshaft (9). Tooth descent wheel (11.2) freely rotates and does not exert any action. The blades (6) have been oriented to expose their lower portion to the wind force (F1), which causes the piston (5) to begin its ascent with the ascent force (F2).

It is easily understood that when the tooth wheels are moved to the tooth-free sections of the bars (12), there can be no interaction between the wheels and the racks.

The alternative movement of the magnets (13) with respect to the solenoid (14) generates electric power capable of being captured, processed, transported, and used for different purposes.

It is not considered necessary to extend the description contents for an expert in the art to understand the scope and advantages of the invention, and to develop and practice to weigh the object of it.

While the invention has been described with respect to a limited number of embodiments, it will be appreciated that many variations, modifications and other applications of the invention may be made. Therefore, the claimed invention as recited in the claims that follow is not limited to the embodiments described herein.

## Claims

1. Generator with vertical piston and reciprocal movement, with orientable blades and conversion of mechanical energy into electrical energy by means of a vertical solenoid device, which comprise a machine that utilises the kinetic energy of a fluid (air or water) in order to obtain electrical energy, **characterized in that** the generator comprises a shaft (2), tie-rods (3), a rotatable head (4), a piston (5), a set of blades (6) which can rotate about horizontal axes, a series of bearings (10), two bars (12), with lower racks (12.1) and upper racks (12.2), a toothed ascent wheel (11.1), a tooth descent wheel (11.2), on an axis common to both, with cams (7), two connecting rods (8), and cranks (9), a series of neodymium magnet (13) or magnets comprising a similar magnetic compound and a solenoid (14).

2. Generator with vertical piston and reciprocal movement, with orientable blades and conversion of mechanical energy into electrical energy by means of a vertical solenoid device according to claim 1, wherein the tooth ascent wheel (11.1) is blocked on its axis in one direction of rotation and rotates freely in the opposite direction, and the same with the tooth descent wheel (11.1) but with the rotation blocking and the free rotation being opposed to that of the tooth ascent wheel (11.1), both wheels being mounted on the same axis.

3. Generator with vertical piston and reciprocal movement, with orientable blades and conversion of mechanical energy into electrical energy by means of a vertical solenoid device according to the previous claims, **characterized in that** between the lower rack (12.1) and the upper rack (12.2) is provided a tooth-free linear section.

4. Generator with vertical piston and reciprocal movement, with orientable blades and conversion of mechanical energy into electrical energy by means of a vertical solenoid device according to previous claims, **characterized in that** it is able to function as a wind-generator or a hydro-generator.

## Patentansprüche

1. Generator mit vertikalen Kolben und hin- und her Bewegung, mit ausrichtbaren Schaufeln und die Umwandlung von mechanischer Energie in elektrische Energie mittels einer vertikalen Magnetvorrichtung, die eine Maschine umfasst, die die kinetische Energie eines Fluids (Luft oder Wasser) nutzt, um elektrische Energie zu erhalten, **dadurch gekennzeichnet, daß** der Generator einen Schaft (2), Zugstangen (3), einen drehbaren Kopf (4), einen Kolben (5), eine Reihe von Schaufeln (6) umfasst, die um horizontale Achsen drehen können, ein Reihe von Lagern (10), zwei Stangen (12), mit der unteren Zahnstangen (12.1) und oberen Zahnstangen (12.2), einem gezahnten Aufstiegsrad (11.1), einer Zahn Abstiegsrad (11.2) auf einer gemeinsamen Achse sowohl mit Nocken (7), zwei Verbindungsstangen (8) und kurbeln (9), eine Reihe von Neodym-Magnet (13) oder Magnete die eine ähnliche magnetische Mischung und einen Elektromagneten (14) umfasst.

2. Generator mit vertikalen Kolben und hin- und her Bewegung, mit ausrichtbaren Schaufeln und die Umwandlung von mechanischer Energie in elektrische Energie mittels einer vertikalen Magnetvorrichtung nach Anspruch 1, wobei der Zahn Aufstiegsrad (11.1) aus Drehung auf seiner Achse in einer Richtung blockiert ist und dreht sich frei in die entgegengesetzte Richtung und die gleiche mit der Zahn Abstiegsrad (11.1), aber mit der Drehsperre und die freie Drehung zu dem des Zahnes Aufstieg Rades (11.1) gegenüberliegt, wobei beide Räder auf der gleichen Achse angebracht sind.

3. Generator mit vertikalen Kolben und hin- und her Bewegung, mit ausrichtbaren Schaufeln und die Umwandlung von mechanischer Energie in elektrische Energie mittels einer vertikalen Magneteinrichtung nach den vorhergehenden Ansprüche, **dadurch gekennzeichnet daß** zwischen dem unteren Zahnstangen (12.1) und der oberen Zahnstange (12.2) ist eine zahnfreien Linear Abschnitt.

4. Generator mit vertikalen Kolben und hin- und her Bewegung, mit ausrichtbaren Schaufeln und die Umwandlung von mechanischer Energie in elektrische Energie mittels einer vertikalen Magneteinrichtung nach den vorhergehenden Ansprüche, **dadurch gekennzeichnet, dass** es in der Lage ist als Windgenerator oder als Hydrogenerator zu laufen.

## Revendications

1. Générateur ayant un piston vertical et un mouvement alternatif, avec des pales orientables et une conversion d'énergie mécanique en énergie électrique au moyen d'un dispositif à électro-aimant vertical, qui comprend une machine qui utilise l'énergie cinétique d'un fluide (air ou eau) afin d'obtenir de l'énergie électrique, **caractérisé en ce que** le générateur comprend un arbre (2), des tirants (3), une tête rotative (4), un piston (5), un ensemble de pales (6) pouvant tourner autour d'axes horizontaux, un série de paliers (10), deux barres (12) avec des crémaillères inférieures (12.1) et des crémaillères supérieures (12.2), une roue dentée de montée (11.1), une roue dentée de descente (11.2), sur un axe commun aux deux, avec cames (7), deux bielles (8) et des manivelles (9), une série d'aimants au néodyme (13) ou d'aimants comprenant un composé magnétique similaire et un électro-aimant (14).

2. Générateur avec un piston vertical et un mouvement alternatif, avec des pales orientables et une conversion d'énergie mécanique en énergie électrique au moyen d'un dispositif à électro-aimant vertical selon la revendication 1, dans lequel la roue dentée de montée (11.1) est bloquée sur son axe dans un sens de la rotation et tourne librement dans la direction opposée, et de même avec la roue dentée de descente (11.1) mais avec le blocage de la rotation et la rotation libre opposés à ceux de la roue dentée de montée (11.1), les deux roues étant montées sur le même axe.

3. Générateur avec un piston vertical et un mouvement alternatif, avec des pales orientables et une conversion d'énergie mécanique en énergie électrique au moyen d'un dispositif à électro-aimant vertical selon les revendications précédentes, **caractérisé en ce qu'**entre la crémaillère inférieure (12.1) et la crémaillère supérieure (12.2), il est prévu une portion linéaire sans dents.

4. Générateur avec un piston vertical et un mouvement alternatif, avec des pales orientables et une conversion d'énergie mécanique en énergie électrique au moyen d'un dispositif électromagnétique vertical selon les revendications précédentes, **caractérisé en ce qu'**il est apte à fonctionner en tant que générateur éolien ou hydro-générateur.
